(19) Europäisches Patentamt

European Patent Office

Office européen des brevets

(11) Veröffentlichungsnummer: **0 355 883**

**A1**

(12) **EUROPÄISCHE PATENTANMELDUNG**

(21) Anmeldenummer: **89201900.1**

(22) Anmeldetag: **19.07.89**

(51) Int. Cl.⁴: **A01G 9/24**

(30) Priorität: **19.07.88 NL 8801824**

(43) Veröffentlichungstag der Anmeldung:
**28.02.90 Patentblatt 90/09**

(84) Benannte Vertragsstaaten:
**BE DE NL**

Anmelder: **ROLLOOS SORENSEN B.V.**
**Krabbescheer 6**
**NL-4941 VW Raamsdonksveer(NL)**

(72) Erfinder: **Vermeulen, Arnoldus Henricus**
**Anthonius**
**Vliethof 51**
**NL-4844 EZ Terheijden(NL)**

(74) Vertreter: **Kooy, Leendert Willem et al**
**OCTROOIBUREAU VRIESENDORP & GAADE**
**P.O. Box 266**
**NL-2501 AW The Hague(NL)**

(54) **Tunnel-Gewächshaus.**

㊙ Eine auf ein Tunnel-Gewächshaus (1) angeordnete Firstlüftung (5) hat in der offenen Position einen Rauchkanal-Effekt, der in der warmen Jahreszeit die Gefahr für Versengung des Gewächses beseitigt. Die Abdeckelemente (6) der Firstlüftung bleiben beim Öffnen und Schliessen parallel zu sich selbst. Die Teile der Firstlüftung auch als Bausatz für bestehende Tunnel-Gewächshäuser erhältlich sein.

FIG. 1

EP 0 355 883 A1

## Tunnel-Gewächshaus.

Die Erfindung bezieht sich auf ein Tunnel-Gewächshaus, das im wesentlichen aus einer Reihe kreissegmentförmiger Bögen besteht, deren Enden auf dem Boden abgestützt sind, welche Bögen mindestens mittels eines Firstrohrs verbunden sind, und über welchen Bögen und Firstrohr eine Decke gespannt ist, wobei die Enden des Gewächshauses nach Bedarf abgeschlossen werden können.

Derartige Gewächshäuser, die zur Verlängerung der Zuchtzeit von bestimmten Gewächsen angewandt werden, sind in vielen Ausführungsformen bekannt. Unter Umständen kann es sich in solchen Tunnel-Gewächshäusern jedoch so warm werden, dass die Gewächse Gefahr laufen, versengt zu werden. Wenn es nicht ausreicht, die Enden des Gewächshauses zu öffnen, wird man die Decke entfernen müssen. Nach kurzer Zeit jedoch kann es wieder nötig sein, die Decke von neuem anzubringen. Das ist natürlich umständlich und kann auch zu Beschädigungen der Decke führen.

Mit dieser Erfindung wird beabsichtigt, im vorhergehenden eine Verbesserung zu schaffen. Gemäss der Erfindung ist dies dadurch erreicht, dass an der höchsten Stelle des Gewächshauses eine Firstlüftung angeordnet ist, die geöffnet und geschlossen werden kann, und mit der in geöffneter Position ein Rauchkanal-Effekt erzielt wird.

Bei einer praxisanwendbaren Ausführungsform besteht die Firstlüftung aus zwei an beiden Seiten des Firstrohrs an den Bögen angeordneten und durch unteren Abstandhalter verbundenen Dachprofilen, aus zwei über den Dachprofilen liegenden und durch oberen Abstandhalten verbundenen Firstlüftungsprofilen, zwischen denen Abdeckelemente angeordnet sind, aus Profilpaare, die in regelmässigem Abstand durch Traversen schwenkbar verbunden sind, aus einer durch die Bögen hin und her verstellbar abgestützten Bedienungsstange und aus einer Anzahl von Verbindungselementen, die so scharnierbar zwischen der Bedienungsstange und der dazugehörigen Traverse angeordnet sind, dass die Firstlüftung geöffnet und geschlossen werden kann.

Das Dachprofil kann mit einer darunter liegenden, horizontalen Rinne zur Aufnahme von Verbindungsmitteln versehen sein, um das Dachprofil mit einem Bogen zu verbinden, mit einer an der einen Seite eines vertikalen Steges liegenden vertikalen Rinne zur Aufnahme von Verbindungsmitteln für die unteren Verbindungsleisten mit einer an der anderen Seite des vertikalen Steges und in Höhe der horizontalen Rinne liegenden Stützrand, und darüber mit zwei in einem Winkel zueinander stehenden Leisten, von denen eine einen Flansch hat, so dass ein Klemmprofil zur Befestigung einer Folienplatte dazwischengeklemmt werden kann. Das Firstlüftungsprofil kann zur Aufnahme der Verbindungsmittel für die oberen Verbindungsleisten aus einer vertikalen Rinne bestehen, und aus einem von der vertikalen Rinne angewandten T-förmigen Rand, der in geschlossener Position der Firstlüftung mit dem vertikalen Steg des Dachprofils zusammenwirken kann. Die Verbindungsmittel für die Profile, Traversen und Bögen können aus Hammerkopfschrauben bestehen, die in die Rinnen passen und mit Muttern festgesetzt werden. Durch diese Verbindungsmittel brauchen bei der Montage der Firstlüftung keine Löcher gebohrt zu werden.

Die Traversen sind vorzugsweise rechtwinklig und mit vier horizontalen Zapfen ausgestattet, die sich in den mit den Profilpaaren verbundenen Drehbüchsen drehen können.

Ein Verbindungselement kann aus zwei Stemmstangen bestehen, die drehbar mit den Traversen und der Bedienungsstange verbunden sind und sich also in jeder Position schräg nach unten um das Firstrohr erstrecken.

Die Dachprofile können ein Gestell stützen, in dem sich der Antrieb für die Bedienungsstange befindet.

Die erfundene Firstlüftung eignet sich sowohl zur Anwendung bei neuen Tunnel-Gewächshäusern als auch bestehenden Tunnel-Gewächshäusern. In beiden Fällen kann die Firstlüftung als Bausatz auf dem Markt erhältlich sein.

Die Erfindung wird im Folgenden anhand der Zeichnung näher erläutert, die mit einem Beispiel eine Ausführungsform einer Firstlüftung gemäss der Erfindung wiedergibt. In der Zeichnung zeigt:

Abbildung 1 perspektivisch ein Gesamtbild eines Tunnel-Gewächshauses;

Abbildung 2 in grösserem Maßstab einen schematischen Längsschnitt durch den First eines Teils des Tunnel-Gewächshauses der Abbildung 1;

Abbildung 3 in grösserem Maßstab eine Darstellung in auseinandergezogener Anordnung des Firstes eines Teils des Tunnel-Gewächshauses der Abbildungen 1 und 2;

Abbildung 4 perspektivisch einen Teil eines Dachprofils;

Abbildung 5 ein Firstlüftungsprofil;

Abbildung 6 eine nähere Darstellung der Befestigungsart der verschiedenen Bauteile; und

Abbildung 7 perspektivisch eine Traverse der Firstlüftung.

Ein Tunnel-Gewächshaus 1 besteht gewöhnlich aus einer Reihe kreissegmentförmiger Bögen 2, die durch horizontale Rohre 3 miteinander verbunden sind. Über diese Bögen 2 und Rohre 3 kann eine Decke 4 gespannt werden. Die Lichtdurchlässigkeit der Decke wird den anzubauenden oder zu züchtenden Gewächsen entsprechend gewählt. Die offenen Enden des Tunnel-Gewächshauses können auf Wunsch geschlossen werden.

Das Öffnen oder Offenlassen der Gewächshausenden reicht unter Umständen nicht aus, um ein Versengen der Gewächse zu verhindern. Deshalb ist gemäss der Erfindung an der höchsten Stelle des Gewächshauses 1 eine Firstlüftung 5 angeordnet worden. Weil damit ein Rauchkanal-Effekt erzielt wird, wird genügend warme Luft entweichen können, um ein Versengen des Gewächses zu verhindern.

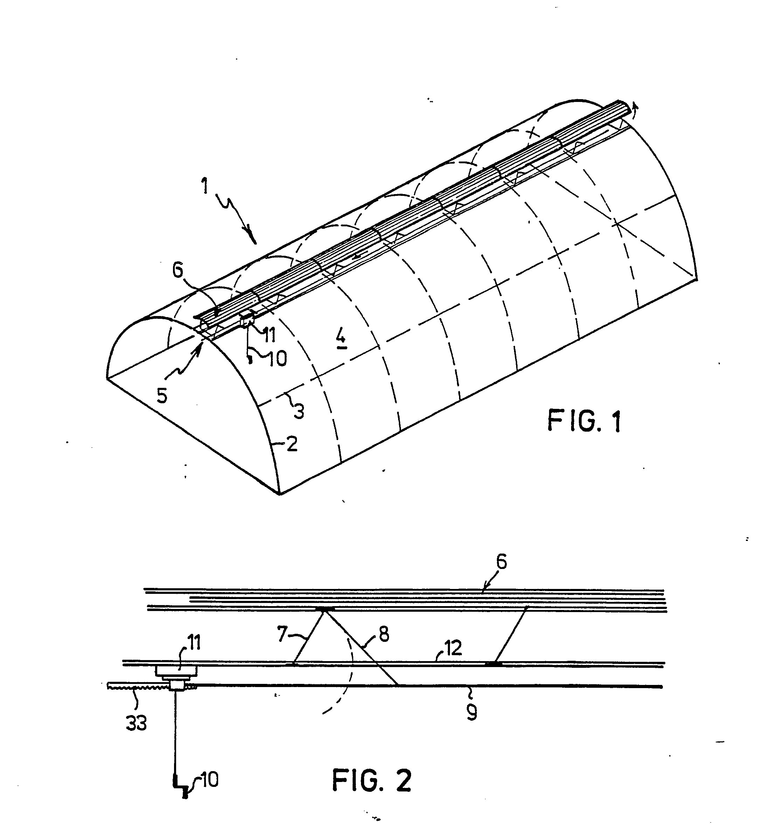

Aus den Abbildungen 1 und 2 geht hervor, dass die Firstlüftung 5 im wesentlichen aus einem Dach 6 besteht, das durch Traversen 7 und Verbindungselemente 8 auf und ab bewegt werden kann, wenn eine Bedienungsstange 9 durch das Drehen an einer Kurbel 10 hin und her bewegt wird. Die Traversen 7 und ein Getriebe 11 zwischen der Kurbel 10 und der Bedienungsstange 9 werden von näher zu erläuternden Dachprofilen 12, die mit den Bögen 2 verbunden sind, gestützt.

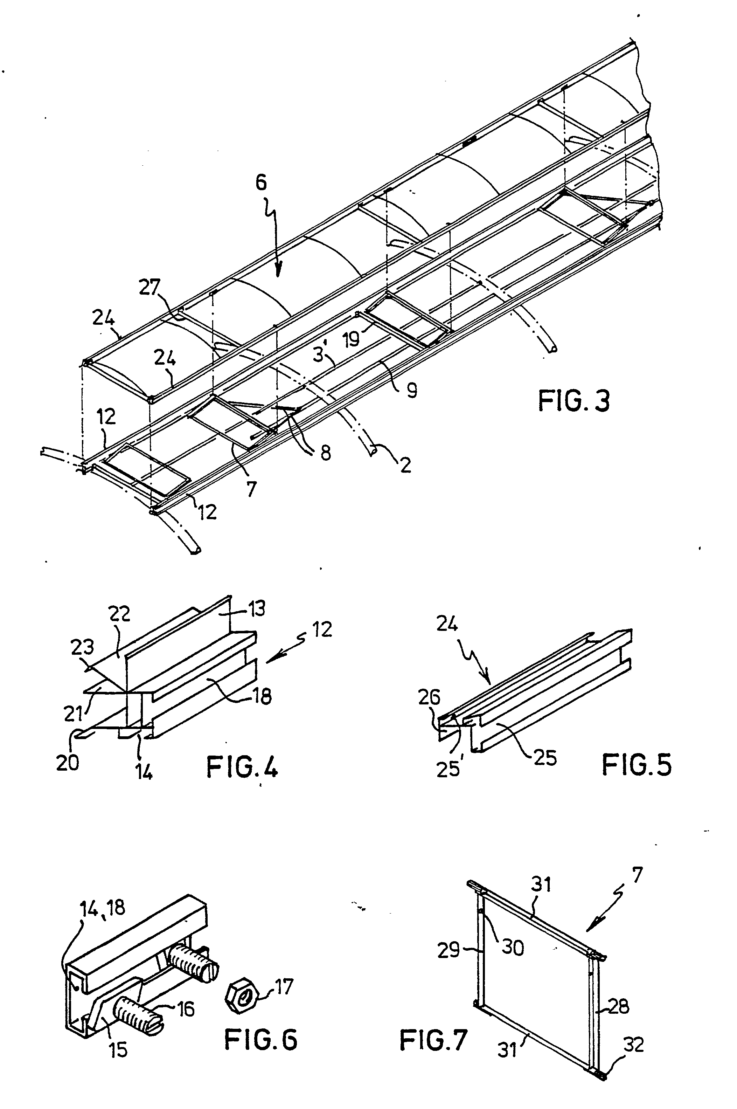

Abbildung 4 zeigt einen Teil des linken Dachprofils 12 der Abbildung 3. Das Dachprofil 12 hat einen vertikalen Steg 13, an den sich an der Unterseite eine horizontale Rinne 14 zur Aufnahme von Verbindungsmitteln anschliesst, um das Dachprofil 12 mit einem Bogen 2 zu verbinden. Geeignete Verbindungsmittel sind nach Abbildung 6 Schrauben mit länglichen, parallelogrammförmigen Köpfen, die in die Rinne passen und mittels Muttern 17 festgesetzt werden können. Mit Muttern 17 kann ein um den Bogen angeordneter Bügel (nicht abgebildet) festgesetzt werden.

An der im montierten Zustand zum Firstrohr 3′ (Abbildung 3) gekehrten Seite ist das Dachprofil 12 mit einer Vertikalen Rinne 18 ausgestattet, in der ähnliche Verbindungsmittel zur Verbindung zweier Dachprofilstücke und zur Befestigung der unteren Abstandhalter 19,die zwei Dachprofile 12 miteinander verbinden, aufgenommen werden.

An der im montierten Zustand nach aussen gekehrten Seite ist ein Stützrand 20 angebracht, der sich an den Boden der Rinne 14 anschliesst, und der mit einem nach unten gebogenen Rand ausgestattet ist, um das Dachprofil waagerecht auf den Bogen abzustützen. Über den Stützrand 20 ragen zwei unter einem Winkel zueinander stehenden Leisten 21 und 22 hinaus, von denen die obere einen nach unten gerichteten Flansch 23 hat, so dass ein passendes (nicht abgebildetes) Klemmprofil zur Befestigung einer Decke dazwischengeklemmt werden kann.

Abbildung 5 zeigt einen Teil eines linken Firstlüftungsprofils 24 der Abbildung 3. Das Firstlüftungsprofil 24 hat an der im montierten Zustand zum Firstrohr 3′ gekehrten Seite eine vertikale Rinne 25, die senkrecht über der vertikalen Rinne 18 des Dachprofils 12 liegt. Die Rinnen 25 besitzen an der "Oberseite" eine Aussparung 25′, die zur Aufnahme des Daches 6 dient, das aus Kunststoff-Deckplatten bestehen kann, die so dimensioniert sind, dass die mit einer Wölbung nach oben durch die Aussparungen 25′ geschoben werden können; danach können die Stoßstellen mit Klebeband abgedichtet werden.

An der im montierten Zustand nach aussen gekehrten Seite des Firstlüftungsprofils 24 ist ein T-förmiger Rand 26 angebracht, dessen Steg den vertikalen Steg 13 des Dachprofils 12 berühren können muss, so dass das Tunnel-Gewächshaus bei geschlossener Firstlüftung 5 vor Hereinregnen geschützt ist. Die beiden Firstlüftungsprofile 24 sind auf bereits beschriebene Weise durch oberen Verbindungsleisten 27 verbunden, die gleich den unteren Verbindungsleisten 19 sein können.

Abbildung 7 zeigt eine Traverse 7, die aus zwei vertikalen Winkeleisen 28 und 29 besteht, in denen nahe dem oberen Ende ein Loch 30 angebracht ist, woran die Verbindungselement 8 angeschlossen werden müssen. Die beiden horizontalen Träger 31 sind an beiden Enden mit Zapfen 32 ausgestattet, die sich in Drehbüchsen (nicht abgebildet) drehen können, die auf bereits beschriebene Weise an die Dach- und Firstlüftungsprofile befestigt sind.

Die anderen Enden der Verbindungselement 8 sind auf in Abbildung 3 sichtbare Weise drehbar mit der Bedienungsstange 9 verbunden. Das eine Ende der Bedienungsstange 9 ist an eine Zahnstange 33 (Abbildung 2) gekoppelt. Je nachdem in welche Richtung die Kurbel 10 gedreht wird, senkt oder hebt sich das Dach 6. Es sind selbstverständlich auch andere Antriebsmöglichkeiten denkbar.

Falls die Firstlüftung als Bausatz für die Montage auf ein bestehendes Tunnel-Gewächshaus geliefert wird, muss man mit dem Untenstehenden rechnen.

Zuerst muss man erwägen, ob die vorhandene Decke benutzt werden kann, oder ob sie ausgewechselt werden muss. Bleibt die alte Decke beibehalten, so muss diese genau über dem Firstrohr 3′ durchgeschnitten werden und nach links und rechts heruntergelassen werden. And die Stirnseite des Tunnel-Gewächshauses, wo später eine Kurbel 10 kommt, kommt sogleich eine Dachauskragung von etwa 30 cm. Man nimmt die Aluminium-Dachprofile 12 und legt sie mitten auf den Bogen, im Abstand von 35 cm zum Firstrohr 3′ mit einer Auskragung von 30 cm an der Seite der Kurbel. Die Profile werden mittels Bügel und Hammerkopfschrauben 16 an die Bögen 2 montiert.

An allen Stellen, an denen sich Bögen befinden, wird ein Diabolo-Leiter mit Hilfe von K-Klemmen und einer Befestigungsleiste an das Firstrohr 3' gehängt. Nun kann die Bedienungsstange 9 durch die Diabolo-Leiter geschoben werden, wobei man aufpassen muss, dass an jedem Bogen an der richten Seite (an der Seite der Kurbel) eine Klemmbüchse übergeschoben wird. Die Traversen 7 werden mit den Löchern 30 nach oben ans Dachprofil 12 gekoppelt, indem sie zuerst in die Drehbüchsen gesteckt werden und dann mit Hammerkopfschrauben ans Profil befestigt werden. Der Abstand von der Drehbüchse zum Abstandhalter muss so kurz wie möglich gehalten werden, und man muss genau rechtwinklig arbeiten. Die Traverse 7 ruht nun zeitweilig auf dem Firstrohr 3' des Tunnel-Gewächshauses 1.

Die Aluminium-Firstlüftungsprofile 24 werden am einfachsten am Boden durch die Verbindungsleisten 27 zu einem Ganzen zusammengebaut. Pro Länge von etwa 6 Metern kann man diesen "Rahmen" nun ober ins Dachprofil legen, wobei die Profile und die Abstandhalter zusammentreffen. So macht man die nächste Länge fertig, und koppelt amn diese Längen untereinander mit Hilfe von Verbindungsleisten und vier Hammerkopfschrauben. Wenn man nun ide ruhende Traverse nach oben scharnieren lässt, kann man sie mittels zwei weiteren Drehbüchsen an die Firstlüftungsprofile 24 befestigen. An jede Traverse 7 befestigt man nun zwei -die Verbindungselement 8 bildende- Stemmstangen, und zwar so, dass sie sich frei drehen können. Das andere Ende der beiden Stemmstangen wird nun mit einer Schräube und Mutter frei drehend an die Klemmbüchse der Bedienungsstange 9 befestigt. Damit ist auch die definitive Stelle der Klemmbüchse bestimmt, und kann diese mit einem Bolzen an die Bedienungsstange 9 befestigt werden. Der Anfang der Bedienungsstange (Kurbelseite) befindet sich in einem Abstand von etwa 1 Meter zum ersten Bogen. Dann kann das Getriebe 11 mit Kurbel 10 an die Dachprofile befestigt werden. Man koppelt die Zahnstange 33, die ganz zur Mitte des Tunnel-Gewächshauses gedreht ist, an die Bedienungsstange. Eventuell müssen die Länge und die Löcher dafür vor Ort angepasst werden. Wenn man nun die Kurbel bedient, wird sich das Dach scherend nach oben bewegen. Alle Befestigungspunkte müssen nochmals kontrolliert werden, sie müssen ganz fest sitzen an jenen Stellen, an denen sie fest bleiben müssen, und frei sein an jenen Stellen, an denen sie sich drehen können müssen.

Die Firstlüftungsprofile 24 und die Dachprofile 12 müssen an ihren Kopplungsstellen mit Butylenkit zugekittet werden, um zu verhindern, dass Wasser durchsickert. Die Firstlüftungsprofile können nun mit den Abdeckplatten 6 versehen werden; diese schiebt man von links nach rechts durch die Aussparungen 25' in den vertikalen Rinnen 25 der Firstlüftungsprofile, wodurch eine Bogenform entsteht. Die Platten 6 werden gegeneinander gelegt, und die Stoßstellen werden mit mitgelieferten Klebenband so überklebt, dass das Klebeband auch um die Aussenseite der Aluminiumprofile 24 läuft.

Bevor die Decke angebracht werden kann, muss zuerst ein Graben von ca. 40 x 40 cm um das Gewächshaus herum gegraben werden, nahe entlang den Bögen. Danach rollt man die Folie aus entlang den Seiten des Gewächshauses, und bringt man das Ganze nach oben zurm First.

Dieser "Folienschlauch" wird vorläufig mit Hilfe einiger Schnure so an das Aluminium-Dachprofil befestigt, dass die Folie parallel straff entlang dem Aluminium-Profil liegt und doch locker ist. Mittels eines mitgelieferten Sicherungswerkzeugs kann man nun nacheinander alle PVC-Sicherungsprofile einklicken. Man muss mit einer freien Überlappung von zirka 3 Metern anfangen, so dass später auch die Vorderseite zufällt. Am besten arbeitet man mit zwei bis drei Leuten, jeder mit eigener Leiter; der eine klickt die Profile ein und der andere leitet die Folie. Nachdem die Folie oben festgemacht ist, können alle Hilfsschnure gelöst werden, und kann die Folie nach unten gezogen werden. Nachdem die Folie in Längsrichtung faltenfrei gespannt worden ist, wird zuerst etwas Erde an die Ecken des Gewächs- hauses geworfen. An den Stellen der Bögen kann der Graben nun zugeschaufelt werden. Die Folie wird an den Enden sauber in gleichmässige Falten gespannt, und man klickt sie dort ins Aluminium-Klickprofil eines eventuellen Frontrahmens. Überflüssige Folie kann weggeschnitten oder sauber weggearbeitet werden.

In dem Rahmen der Ansprüche fallen auch andere Ausführungsformen als die, die in der Zeichnung abgebildet ist.

## Ansprüche

1. Tunnel-Gewächshaus, im wesentlichen bestehend aus einer Reihe kreissegmentförmiger Bogen, deren Enden auf dem Boden abgestützt sind, welche Bögen mindestens durch ein Firstrohr verbunden sind, und über welchen Bögen und Firstrohr eine Decke gespannt ist, wobei die Enden des Gewächshauses nach Bedarf abgeschlossen werden können, **dadurch gekennzeichnet,** dass an die höchste Stelle des Gewächshauses 1. eine Firstlüftung angeordnet ist, die geöffnet und geschlossen werden kann, und mit der in geöffneter Position ein Rauchkanal-Effekt erzielt wird.

2. Tunnel-Gewächshaus gemäss Anspruch 1, **dadurch gekennzeichnet,** dass die Firstlüftung (5) aus zwei an beiden Seiten des Firstrohrs (3') an den Bögen (2) angeordneten und durch unteren Abstandhalter (19) verbundenen Dachprofile (12), aus zwei über den Dachprofilen liegenden und durch die oberen Abstandhalter (27) verbundenen Firstlüftungsprofilen (24), zwischen denen Abdeckelement (6) angeordnet sind, aus Profilpaare, die in regelmässigem Abstand durch Traversen (7) schwenkbar verbunden sind, aus einer durch die Bögen hin und her verstellbar abgestützten Bedienungsstange (9) und aus einer Anzahl von Verbindungselementen (8) besteht, die so scharnierbar zwischen der Bedienungsstange (9) und einer dazugehörigen Traverse (7) angeordnet sind, dass die Firstlüftung geöffnet und geschlossen werden kann.

3. Tunnel-Gewächshaus gemäss Anspruch oder 2, **dadurch gekennzeichnet,** dass das Dachprofil (12) eine darunterliegende, horizontale Rinne (14) zur Aufnahme von Verbindungsmitteln, um das Dachprofil mit einem Bogen (2) zu verbinden, eine an der einen Seite eines vertikalen Steges (13) liegenden vertikalen Rinne (18) zur Aufnahme von Verbindungsmitteln für die unteren Verbindungsleisten (19), einen an der anderen Seite des vertikalen Steges (13) und in Höhe der horizontalen Rinne liegenden Stützrand (20, und darüber zwei in einem Winkel zueinander stehende Leisten (21, 22) aufweist, von denen eine einen Flansch (23) hat, so dass ein Klemmprofil zur Befestigung einer Profil-platte dazwischengeklemmt werden kann.

4. Tunnel-Gewächshaus gemäss Anspruch 1 oder 2, **dadurch gekennzeichnet,** dass das Firstlüftungsprofil (24) aus einer vertikalen Rinne (25) zur Aufnahme von Verbindungsmitteln für die oberen Verbindungsleisten (27), und aus einem von der vertikalen Rinne abgewandten T-förmigen Rand (26) besteht, der in geschlossener Position der Firstlüftung mit dem vertikalen Steg (13) des Dachprofils (12) zusammenwirken kann.

5. Tunnel-Gewächshaus gemäss einer der vorherigen Ansprüche **dadurch gekennzeichnet,** dass die Verbindungsmittel für die Profile (12, 24), Traversen (7) und Bögen (2) aus Hammerkopfschrauben (16) bestehen, die in den Rinnen (14, 18, 25) passen und mit Muttern festgesetzt werden.

6. Tunnel-Gewächshaus gemäss Anspruch 4, **dadurch gekennzeichnet,** dass das Firstlüftungsprofil (24) eine Aussparung (25') zur Aufnahme der Abdeckelemente (6) hat.

7. Tunnel-Gewächshaus gemäss einer der Ansprüche 1-4, **dadurch gekennzeichnet,** dass die Traversen (7) rechtwinklig sind und vier horizontale Zapfen (32) haben, die sich in den mit den Profilpaaren verbundenen Drehbüchsen drehen können.

8. Tunnel-Gewächshaus gemäss einer der Ansprüche 1-4, **dadurch gekennzeichnet,** dass ein Verbindungselement (8) aus zwei Stemmstangen besteht, die drehbar mit den Traversen (7) und der Bedienungsstange (9) verbunden sind, und sich also in jeder Position schräg nach unten um das Firstrohr (3') erstrecken.

9. Tunnel-Gewächshaus gemäss einer der Ansprüche 1-4, **dadurch gekennzeichnet,** dass die Dachprofile ein Gestell stützen, in dem sich der Antrieb für die Bedienungsstange befindet.

10. Bausatz zur Montage einer Firstlüftung auf ein bestehendes Tunnel-Gewächshaus gemäss einer der vorhergehenden Ansprüchen.

FIG. 1

FIG. 2

Rolloos Sørensen B.V., te Raamsdonksveer

FIG. 3

6

27

24

24

12

12

19

3'

9

8

2

7

FIG. 4

22

23

21

20

14

13

12

18

FIG. 5

24

26

25'

25

FIG. 6

14, 18

15

16

17

FIG. 7

31

30

29

28

31

32

7

Rolloos Sørensen B.V. te Raamsdonksveer

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2405638 (RICHEL) <br> * Seite 2, Zeile 5 - Seite 3, Zeile 11; Figuren 1, 2 * | 1 | A01G9/24 |
| A | | 2 | |
| | ---- | | |
| X | FR-A-1400547 (DENIS) <br> * das ganze Dokument * | 1 | |
| A | | 2 | |
| | ---- | | |
| X | DE-B-1043704 (KÖSTER) <br> * Spalte 1, Zeile 52 - Spalte 3, Zeile 35; Figuren 1, 3 * | 1 | |
| | ---- | | |
| A | US-A-3392658 (KORF) <br> * Spalte 2, Zeile 35 - Spalte 4, Zeile 72; Figuren 1-6 * | 2, 7 | |
| | ---- | | |
| A | DE-B-1017356 (EBERSPÄCHER) <br> * Spalte 3, Zeile 48 - Spalte 5, Zeile 3; Figuren 1-7 * | 2 | |
| | ------ | | |

RECHERCHIERTE SACHGEBIETE (Int. Cl.5)

A01G

Der vorliegende Recherchenbericht wurde für alle Patentansprüche erstellt

| Recherchenort | Abschlußdatum der Recherche | Prüfer |
|---|---|---|
| DEN HAAG | 23 OKTOBER 1989 | HERYGERS J.J. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

................................................................
& : Mitglied der gleichen Patentfamilie, übereinstimmendes Dokument